# EUROPEAN PATENT SPECIFICATION

(11) **EP 0 413 374 B1**
(45) Date of publication and mention of the grant of the patent: **20.04.1994**
(21) Application number: 90201894.4
(22) Date of filing: 11.07.1990
(51) Int. Cl.: E21B 43/22

(54) **Composition containing an alkylxylensulfonate and a glycol and its use for enhanced oil recovery**
Alkylxylensulfonat und Glycol enthaltende Zusammensetzung und ihre Verwendung zur verbesserten Erdölgewinnung
Composition contenant un alkylxylène-sulfonate et un glycol et l'utilisation en récupération assistée du pétrole

(30) Priority: 14.07.1989 GB 8916151
(43) Date of publication of application: 20.02.1991
(73) Proprietor: SHELL INTERNATIONALE RESEARCH MAATSCHAPPIJ B.V., 2596 HR Den Haag (NL)
(72) Inventor: Muijs, Herman Mathieu, NL-1031 CM Amsterdam (NL); Van Schaik, Jan, NL-1031 CM Amsterdam (NL)

(56) References cited:
- GB-A- 2 165 280
- US-A- 3 983 940
- US-A- 4 005 749
- US-A- 4 452 308

## Description

Alkylxylene sulphonates are known products for use in enhanced oil recovery. The products have been designed for use as the primary surfactant in micellar-polymer flooding processes. Suitable formulations have been developed for chat purpose (see e.g. European Patent Specifications 111354 and 148517). The formulations generally comprise a cosurfactant and a solvent. Alkylxylene sulphonates are known under the trade mark "ENORDET".

There have now been found formulations comprising alkylxylene sulphonates which are much more versatile and do not need to be used together with a solvent.

The invention relates to a composition containing a) from 36 to 70% by weight of an alkylated xylene sulphonic acid salt and b) from 5 to 40% by weight of a glycol having a molecular weight of between 200 and 1500; the balance being water and inactive material.

Polyethylene glycol is used in enhanced oil recovery as a sacrificial agent (see U.S. patent specifications 4,589,489; 4,005,749 and 4,452,308).

Preferred compositions are those wherein an alkylated xylene sulphonic acid salt is used as ortho-xylene sulphonic acid salt with the formula 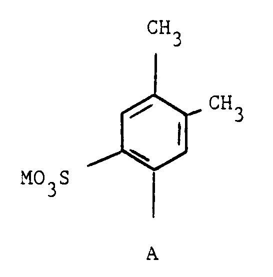
wherein M is an alkali metal or ammonium and A is a C₈-C₃₀ alkyl group, preferably a C₁₀-C₁₈ alkyl group.

The alkyl group may be bound to he aromatic ring from its 2-position to its mid-position.

In a preferred composition under b) is used a polyethylene glycol having an average molecular weight between 200 and 1500. In a more preferred composition the amount of sulphonic acid salt ranges from 56 to 65% by weight, the amount of polyethylene glycol ranges from 15 to 23% by weight; the balance being water and inactive material. The polyethylene glycol preferably has an average molecular weight of 1000.

In another more preferred composition the amount of sulphonic acid salt ranges from 36 to 70% by weight and the amount of ethylene glycol ranges from 5 to 40% by weight; the balance being water and inactive material. The polyethylene glycol preferably has an average molecular weight of 400.

The invention further relates to a method for enhancing recovery of oil from a subterranean oil-containing reservoir, which method comprises injecting into the reservoir an aqueous solution or dispersion of a composition as described above, displacing said aqueous solution or dispersion within said subterranean reservoir, and recovering oil from the reservoir.

The compositions according to the invention are easily handleable and contain a high concentration of active matter, which compositions further do not need to be used in combination with solvents, like isopropylalcohol, glycolethers and hydrocarbons. The preferred compositions are homogeneous and stable liquids.

The compositions may be prepared by mixing the alkylated xylene sulphonic acid with polyethylene glycol and caustic. A typical procedure is, for example, mixing the alkylated xylene sulphonic acid with polyethylene glycol, the required amount of water being added, followed by the gradual addition of highly concentrated sodium hydroxide solution in water.

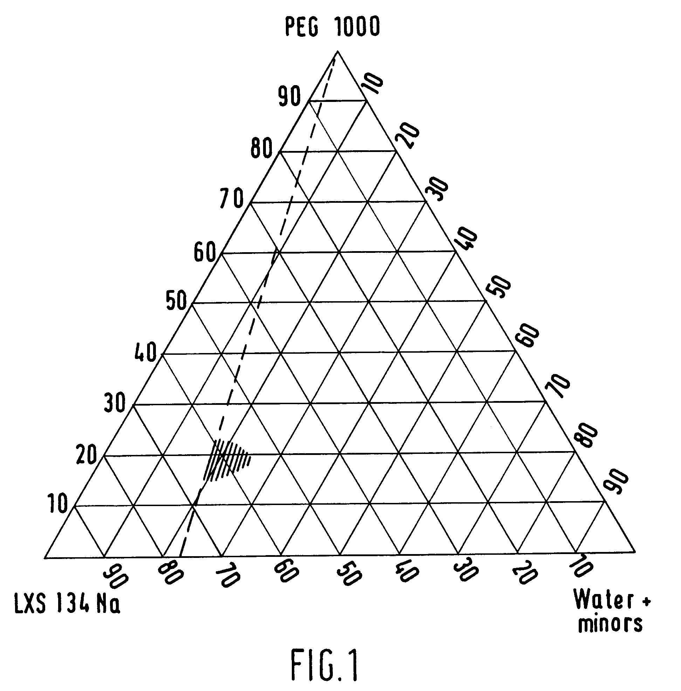

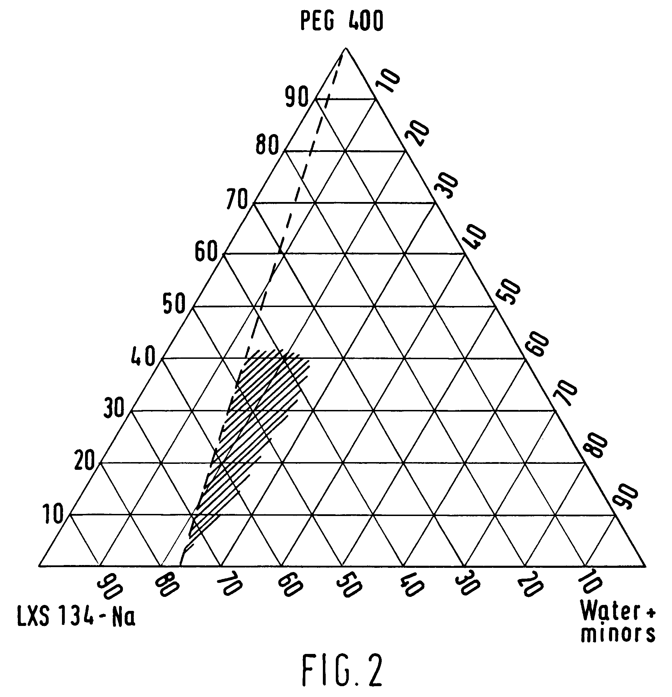

In figures 1 and 2 are represented compositions comprising the sodium salt of C₁₃-C₁₄-alkyl-o-xylene sulphonic acid, polyethylene glycol and water.

In figures 1 and 2 are given compositions with polyethylene glycol with average molecular weight of 1000 and 400 respectively.

The hatched areas in the figures represent the compositions which are of most interest and which form homogeneous, easily flowing liquid systems.

## Claims

1. A composition containing a) from 36 to 70% by weight of an alkylated xylenesulphonic acid salt and b) from 5 to 40% by weight of a glycol having a molecular weight of between 200 and 1500; the balance being water and inactive material.

2. A composition as claimed in claim 1, wherein under a) is used an ortho-xylene sulphonic acid salt with the formula 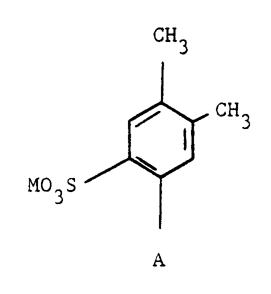 wherein M is an alkali metal or ammonium and A is a C₈-C₃₀ alkyl group.

3. A composition as claimed in claim 2, wherein the alkyl group is a C₁₀-C₁₈ alkyl group.

4. A composition as claimed in any one of the claims 1-3, wherein under b) is used a polyethylene glycol having an average molecular weight between 200 and 1500.

5. A composition as claimed in any one of the claims 1-4, wherein the amount of sulphonic acid salt ranges from 56 to 65% by weight, the amount of polyethylene glycol ranges from 15 to 23% by weight; the balance being water and inactive material.

6. A composition as claimed in claim 5, wherein the polyethylene glycol has an average molecular weight of 1000.

7. A composition as claimed in claim 4, wherein the polyethylene glycol has an average molecular weight of 400.

8. A method for enhancing recovery of oil from a subterranean oil-containing reservoir, which method comprises injecting into the reservoir an aqueous solution or dispersion of a composition as claimed in any one of the claims 1-7, displacing said aqueous solution or dispersion within said subterranean reservoir, and recovering oil from the reservoir.

## Patentansprüche

1. Eine Zusammensetzung, enthaltend a) von 36 bis 70 Gew% eines alkylierten Xylensulphonsäuresalzes und b) von 5 bis 40 Gew% eines Glycols mit einem Molekulargewicht zwischen 200 und 1500; wobei die Restmenge aus Wasser und inaktivem Material besteht.

2. Eine Zusammensetzung wie in Anspruch 1 beansprucht, in der unter a) ein ortho-Xylensulphonsäuresalz mit der Formel 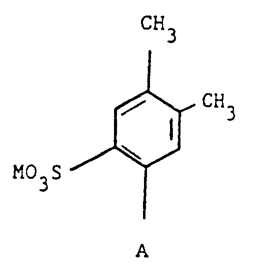 verwendet wird, in der M ein Alkalimetall oder Ammonium ist und A eine C₈-C₃₀-Alkylgruppe ist.

3. Eine Zusammensetzung wie in Anspruch 2 beansprucht, in der die Alkylgruppe eine C₁₀₋C₁₈-Alkylgruppe ist.

4. Eine Zusammensetzung wie in irgendeinem der Ansprüche 1 bis 3 beansprucht, wobei unter b) ein Polyethylenglycol mit einem durchschnittlichen Molekulargewicht zwischen 200 und 1500 verwendet wird.

5. Eine Zusammensetzung wie in irgendeinem der Ansprüche 1 bis 4 beansprucht, wobei die Menge an Sulphonsäuresalz im Bereich von 56 bis 65 Gew% und die Menge an Polyethylenglycol im Bereich von 15 bis 23 Gew% liegt, wobei die Restmenge aus Wasser und inaktivem Material besteht.

6. Eine Zusammensetzung wie in Anspruch 5 beansprucht, in der das Polyethylenglycol ein durchschnittliches Molekulargewicht von 1000 hat.

7. Eine Zusammensetzung wie in Anspruch 4 beansprucht, in der das Polyethylenglycol ein durchschnittliches Molekulargewicht von 400 hat.

8. Ein Verfahren zur Verbesserung der Ölförderung aus einer unterirdischen Öl enthaltenden Lagerstätte, welches das Injizieren einer wässrigen Lösung oder das Dispergieren einer Zusammensetzung, wie in irgendeinem der Ansprüche 1 bis 7 beansprucht, in die Lagerstätte, das Hindurchpressen (displacing) der wässrigen Lösung oder das Dispergieren derselben innerhalb der unterirdischen Lagerstätte und die Ölförderung aus der Lagerstätte umfaßt.

## Revendications

1. Une composition contenant a) de 36 à 70 % en poids d'un sel d'acide xylènesulfonique alkylé et b) de 5 à 40 % en poids d'un glycol ayant un poids moléculaire compris entre 200 et 1500, le complément étant de l'eau et de la matière inactive.

2. Une composition selon la revendication 1, dans laquelle sous a) on utilise un sel d'acide ortho-xylène sulfonique de la formule 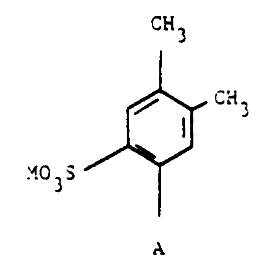 dans laquelle M est un métal alcalin ou l'ammonium et A est un groupe alkyle en C₁₀-C₁₈.

3. Une composition selon la revendication 2, dans laquelle A est un groupe alkyle en C₈-C₃₀.

4. Une composition selon l'une quelconque des revendications 1-3, dans laquelle sous b) on utilise un polyéthylène glycol ayant un poids moléculaire moyen compris entre 200 et 1500.

5. Une composition selon l'une quelconque des revendications 1-4, dans laquelle la quantité de sel d'acide sulfonique est comprise entre 56 et 65 % en poids, la quantité de polyéthylène glycol est comprise entre 15 et 23 % en poids, le complément étant de l'eau et de la matière inactive.

6. Une composition selon la revendication 5, dans laquelle le polyéthylène glycol a un poids moléculaire moyen de 1000.

7. Une composition selon la revendication 4, dans laquelle le polyéthylène glycol a un poids moléculaire moyen de 400.

8. Une méthode pour améliorer l'extraction du pétrole d'un réservoir souterrain contenant du pétrole, selon laquelle on injecte dans le réservoir une solution ou dispersion aqueuse d'une composition selon l'une quelconque des revendications 1-7, on déplace cette solution ou dispersion aqueuse à l'intérieur du réservoir souterrain et on extrait le pétrole du réservoir.
